# EUROPEAN PATENT SPECIFICATION

(11) **EP 3 925 726 B1**
(45) Date of publication and mention of the grant of the patent: **31.05.2023**
(21) Application number: 20755667.1
(22) Date of filing: 29.01.2020
(51) Int. Cl.: B23K 26/14, B23K 26/146

(54) **NOZZLE FOR LASER PROCESSING, AND LASER PROCESSING DEVICE**
DÜSE ZUR LASERBEARBEITUNG UND LASERBEARBEITUNGSVORRICHTUNG
BUSE DESTINÉE AU TRAITEMENT LASER ET DISPOSITIF DE TRAITEMENT LASER

(30) Priority: 15.02.2019 JP 2019025864
(43) Date of publication of application: 22.12.2021
(73) Proprietor: Amada Co., Ltd., Isehara-shi, Kanagawa 259-1196 (JP)
(72) Inventor: KOBAYASHI, Ryo, Isehara-shi, Kanagawa 259-1196 (JP); SUGIYAMA, Akihiko, Isehara-shi, Kanagawa 259-1196 (JP); BABA, Yasuhito, Isehara-shi, Kanagawa 259-1196 (JP)
(74) Representative: Grünecker Patent- und Rechtsanwälte PartG mbB
(86) International application number: PCT/JP2020/003091
(87) International publication number: WO 2020/166327

(56) References cited:
- JP-A- H09 141 483
- JP-A- H10 328 879
- JP-A- 2014 136 233
- JP-A- 2014 136 233
- JP-A- 2015 033 705
- JP-A- 2018 122 349

## Description

### Technical Field

The present disclosure relates to a nozzle for laser machining and a laser machining apparatus.

### Background Art

In laser machining, a technique is known that includes spraying, to a work, cooling fluid that is mixture of air and cooling water and performing laser machining while cooling the work. With this technique, machining defects due to excessive heat input into the work are less likely to occur.

Patent Literature 1 describes a nozzle capable of ejecting cooling fluid to a work. This nozzle has a triple nozzle structure, and includes a center hole opened in a tip end of a middle nozzle, and an ejection hole provided between the middle nozzle and an outer nozzle in a ring shape surrounding the center hole. A laser beam and assist gas are emitted through the center hole, and cooling fluid that is mixture of air and cooling water is ejected through the ejection hole.

Further in the nozzle described in Patent Literature 1, a tip end portion of the middle nozzle is formed in a trumpet shape expanding in a radial direction toward a tip end, and the cooling fluid is ejected to expand outward in the radial direction along an outer shape of the tip end portion of the middle nozzle. Therefore, it is difficult for the cooling fluid to flow around between a tip end face of the middle nozzle and the work, and a defect is less likely to occur in a tracking operation to be controlled based on electrostatic capacity.
JP 2014 136233 A discloses a nozzle according to the preamble of claim 1. JP 2018 122349 A proposes to provide a laser cutting processing nozzle capable of effectively performing discharge of dross by efficiently performing penetration of assist gas into a cut groove upon laser cutting processing. The same assist gas is ejected from an inner side nozzle and an outer side nozzle of a double structure.

### Citation List

### Patent Literature

Patent Literature 1: Japanese Patent Application Laid-Open Publication No. 1998-328879

### Summary

In response to increase in output of a laser oscillator, cooling a work is more important for suppressing excessive heat input into the work, whereas in response to spread of a fiber laser, a luminous flux of laser beams can be reduced in diameter, and a volume of assist gas to be ejected tends to decrease.

Therefore, it is considered that also in such a nozzle capable of ejecting cooling fluid as described in Patent Literature 1, a center hole is reduced in diameter, to form a so-called small diameter nozzle.

However, if the center hole is reduced in diameter, a distance increases between an inner wall of the center hole through which the assist gas is emitted and an inner wall of the ejection hole through which the cooling fluid is ejected. Furthermore, since the volume of the assist gas to be emitted through the center hole decreases, flow of the cooling fluid is less likely to be suppressed, and the cooling fluid ejected through the ejection hole is easier to flow around between a tip end face of the nozzle and the work. The ease of flow-around of the cooling fluid becomes more remarkable, when the volume and pressure of the assist gas to be ejected are decreased.

There is concern of possibility of occurrence of a defect in laser machining that, for example, if the cooling fluid flows around between the tip end face of the nozzle and the work, a tracking operation might be unstable, and machining accuracy might decrease due to the cooling fluid caught into the assist gas emitted through the center hole.

Therefore, aspects of the present disclosure are directed to provide a nozzle for laser machining and a laser machining apparatus capable of ejecting cooling fluid while reducing occurrence of a defect in laser machining.

The invention is a nozzle according to independent claim 1. Preferred embodiments are set out in the dependent claims.

According to one or more embodiments, such an effect can be obtained that ejection of cooling fluid is possible while a defect in laser machining is less likely to occur.

### Brief Description of Drawings

[Figure 1] Figure 1 is a configuration diagram of a laser machining apparatus 91 that is a laser machining apparatus according to the present embodiment.
[Figure 2] Figure 2 is a bottom surface view of a nozzle 7 provided in the laser machining apparatus 91.
[Figure 3] Figure 3 is a side view of the nozzle 7.
[Figure 4] Figure 4 is a top surface view of the nozzle 7.
[Figure 5] Figure 5 is a longitudinal sectional view at a S5-S5 position in Figure 4.
[Figure 6] Figure 6 is a longitudinal sectional view at a S6-S6 position in Figure 4.
[Figure 7] Figure 7 is a view explaining a main part of the nozzle 7.
[Figure 8] Figure 8 is a view explaining a main part of a comparative nozzle 7p that is a comparative example.
[Figure 9] Figure 9 is a model diagram explaining preconditions of simulation.
[Figure 10] Figure 10 is a flow velocity distribution chart obtained in the simulation, in a case where the nozzle 7 is used.
[Figure 11] Figure 11 is a flow velocity distribution chart obtained in the simulation, in a case where the comparative nozzle 7p is used.

### Description of Embodiment

A nozzle for laser machining and a laser machining apparatus according to the present embodiment will be described by means of a nozzle 7 and a laser machining apparatus 91.

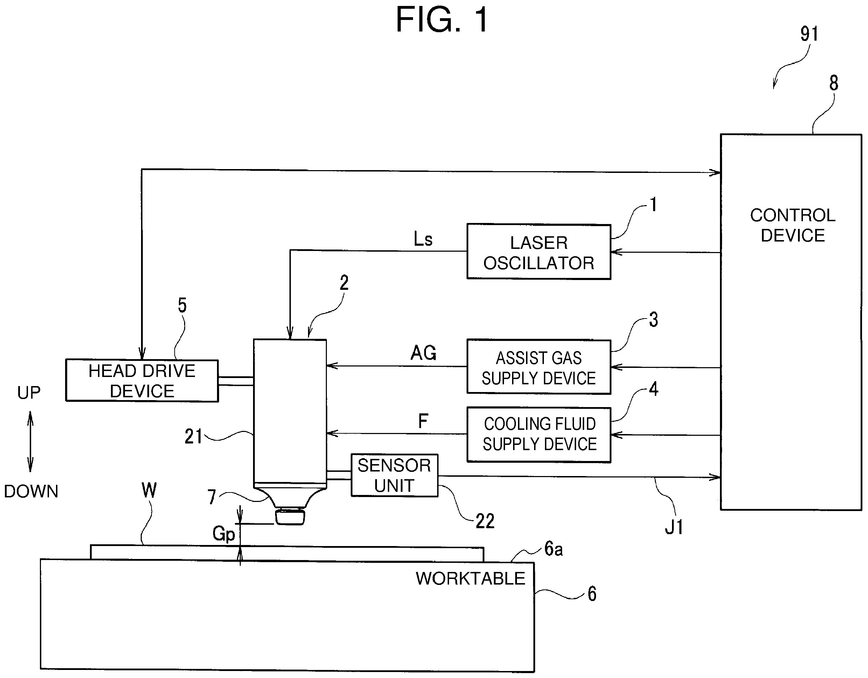

Figure 1 is a configuration diagram of the laser machining apparatus 91. An up-down direction in the following description is prescribed by an arrow direction shown in Figure 1.

The laser machining apparatus 91 includes a laser oscillator 1, a laser machining head 2, an assist gas supply device 3, a cooling fluid supply device 4, a head drive device 5, a worktable 6, and a control device 8.

The laser machining head 2 includes a machining head main body 21, the nozzle 7, and a tracking sensor unit 22.

The machining head main body 21 is formed in a cylindrical shape, and has a tip end to which the nozzle 7 is removably mounted.

The tracking sensor unit 22 detects a nozzle gap Gp that is a distance between the nozzle 7 and a work W supported on the worktable 6 based on electrostatic capacity between the nozzle 7 and the work W. The tracking sensor unit 22 outputs the nozzle gap Gp as tracking information J1 to the control device 8.

The laser oscillator 1 is, for example, a fiber laser, generates a laser beam Ls and supplies the beam to the laser machining head 2.

The assist gas supply device 3 supplies assist gas AG such as oxygen or nitrogen to the laser machining head 2.

The cooling fluid supply device 4 supplies, for example, cooling fluid F in which cooling refrigerant such as water and gas such as air are mixed to the laser machining head 2.

The head drive device 5 moves the laser machining head 2 in three axis directions in total including two axis directions of parallel X-axis and Y-axis and a Z-axis direction being a vertical up-down direction to a work support surface 6a of the worktable 6.

The control device 8 controls operations of the laser oscillator 1, the assist gas supply device 3, the cooling fluid supply device 4 and the head drive device 5.

Also, the control device 8 controls the head drive device 5 to maintain the nozzle gap Gp at a predetermined value, based on the tracking information J1 from the tracking sensor unit 22.

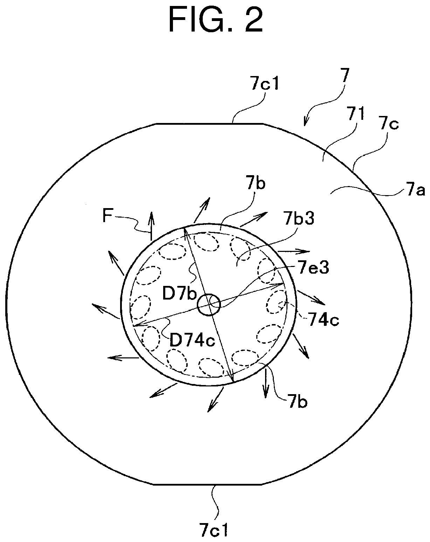

Next, the nozzle 7 will be described with reference to Figure 2 to Figure 6.

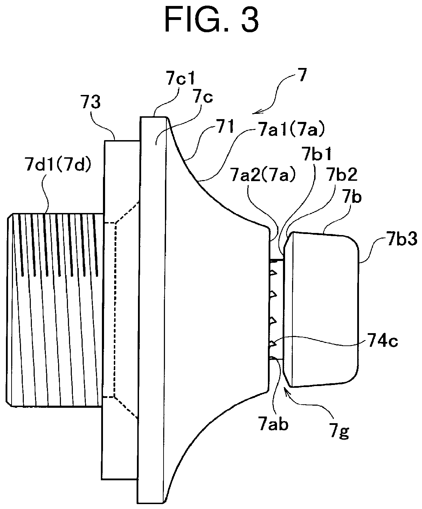

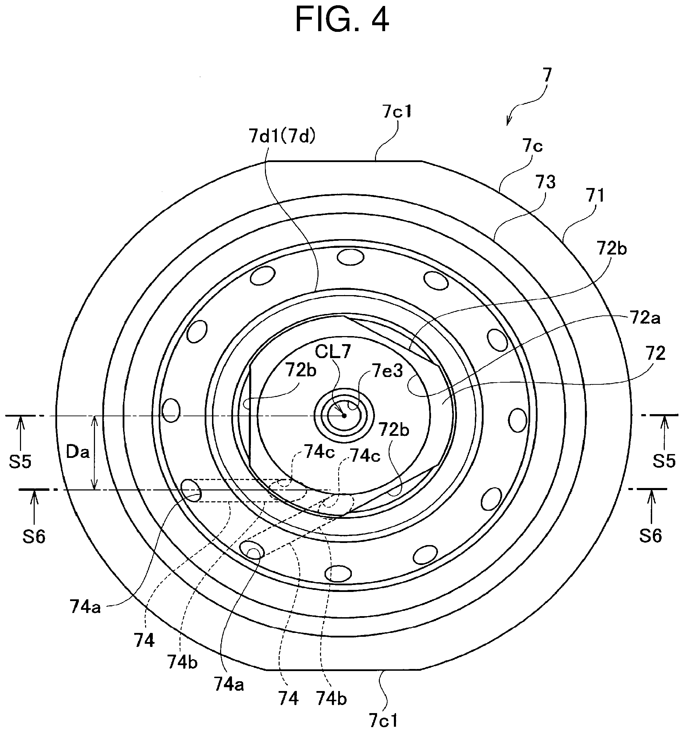

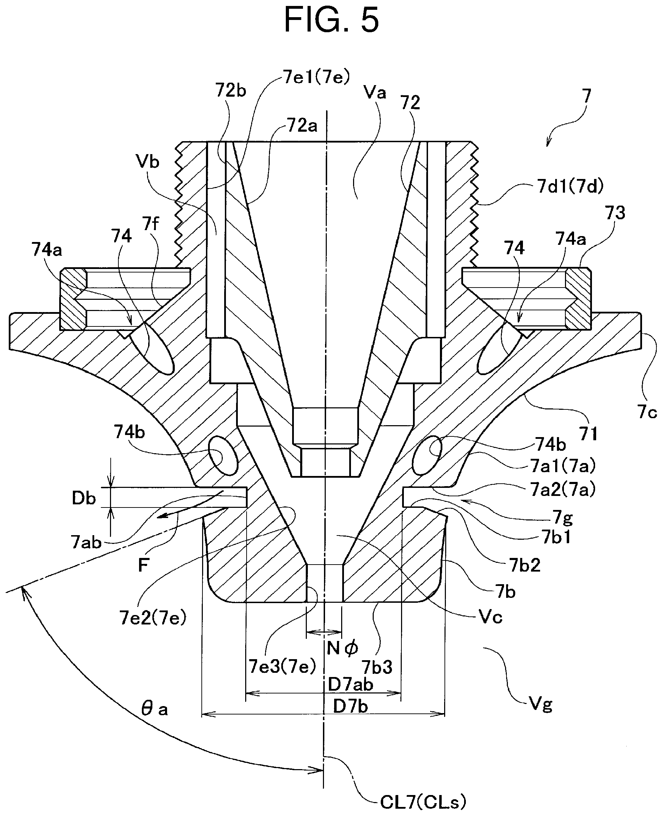

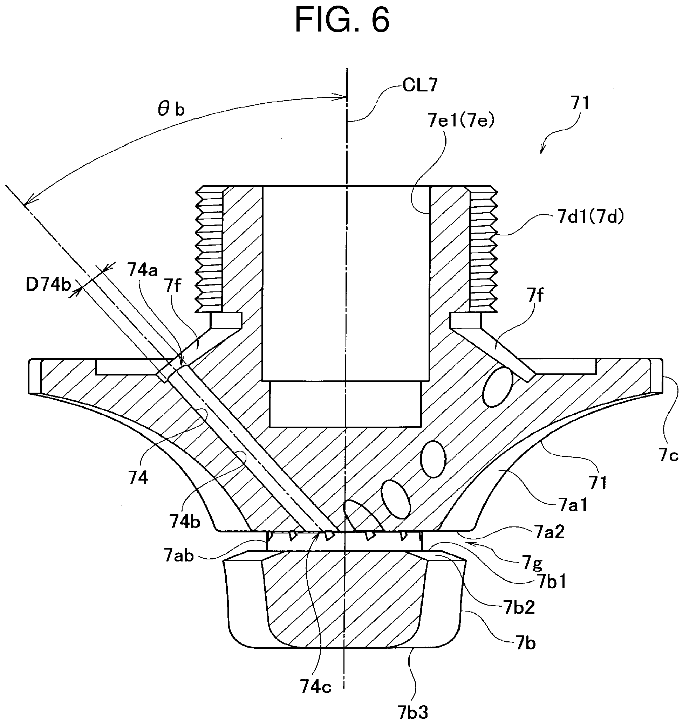

Figure 2 is a bottom surface view of the nozzle 7, Figure 3 is a side view of the nozzle 7, and Figure 4 is a top surface view of the nozzle 7. Further, Figure 5 and Figure 6 are sectional views at a S5-S5 position and a S6-S6 position in Figure 4, respectively.

As shown in Figure 5, the nozzle 7 is of a double nozzle type, and includes an outer nozzle 71 and an inner nozzle 72. Figure 3 to Figure 5 also show an annular collar 73 interposed in a close contact state between the nozzle 7 and the machining head main body 21 when the nozzle 7 is mounted to the machining head main body 21 of the laser machining head 2.

The outer nozzle 71 includes a main body part 7a, a coupling portion 7ab, a tip end part 7b, and a mounting part 7d.

The main body part 7a includes a flange portion 7c, a main body inclined portion 7a1, and a main body end face portion 7a2.

The flange portion 7c is formed with a maximum outer diameter in the outer nozzle 71, and includes a pair of linearly cut parallel cut portions 7c1 as sandwiching portions of a tool during mounting and removal.

The main body inclined portion 7a1 possesses a peripheral surface shape reducing in diameter and recessing inward from the flange portion 7c toward a tip end side (downside).

The main body end face portion 7a2 is an annular flat surface connected to a tip end side end portion of the main body inclined portion 7a1, and being orthogonal to an axis CL7 of the nozzle 7. A small diameter side end portion of the main body end face portion 7a2 is connected to the coupling portion 7ab.

The coupling portion 7ab is a cylindrical portion having a peripheral surface with an outer diameter D7ab and being formed with a length Db in an axial direction, and couples the main body part 7a to the tip end part 7b in an axis CL7 direction (the up-down direction).

The tip end part 7b is formed in a cylindrical shape, and includes, in an upper end portion, a facing surface portion 7b1 that is an annular plane connected to the coupling portion 7ab and orthogonal to the axis CL7, and an annular inclined surface portion 7b2 inclined downward from an outer peripheral end of the facing surface portion 7b1 toward outside in a radial direction.

A tip end face portion 7b3 that is a bottom surface of the tip end part 7b has a flat end face orthogonal to the axis CL7. In the tip end face portion 7b3, disposed is a sensor (not shown) electrically connected to the tracking sensor unit 22 to maintain the nozzle gap Gp.

In the nozzle 7, a part including the coupling portion 7ab formed therein has a small outer diameter, and forms a circumferential groove portion 7g between the main body part 7a and the tip end part 7b.

The mounting part 7d is formed as an annular part protruding upward from a top surface of the flange portion 7c. An outer peripheral surface of the mounting part 7d is formed as an external thread portion 7d1 including external threads.

On the other hand, in a bottom surface part of the machining head main body 21 in the laser machining head 2, an internal thread portion (not shown) to which the nozzle 7 is attached is formed, and the nozzle 7 can be detachably attached to the machining head main body 21 by screwing the external thread portion 7d1 into the internal thread portion.

An inclined surface 7f, which increases in outer diameter toward the downside, is formed on a root side of the mounting part 7d connected to the flange portion 7c. That is, the nozzle 7 includes the inclined surface 7f as a part of the top surface of the flange portion 7c.

The outer nozzle 71 includes, as a first communication hole, a communication hole 7e extending through an upper end portion as a first end portion and a lower end portion as a second end portion around the axis CL7.

An upper portion of the communication hole 7e is formed as a straight hole portion 7e1 in a straight shape, and the inner nozzle 72 is mounted to the straight hole portion 7e1 by press-fit or the like.

The communication hole 7e is reduced in diameter in a step-like manner from the straight hole portion 7e1 toward the downside, is further continuously reduced in inner diameter through a narrowed hole portion 7e2, to reach an outlet hole 7e3 with a nozzle diameter Nφ of a minimum inner diameter, and is opened in the tip end face portion 7b3.

As shown in Figure 4, in an outer peripheral surface of the inner nozzle 72, a plurality of planar cut portions 72b parallel to the axis CL7 are formed. The cut portions 72b and the straight hole portion 7e1 form a space Vb that is a communication path communicating in the up-down direction as shown in Figure 5.

As shown in Figure 5, the inner nozzle 72 includes a through hole 72a around the axis CL7. A lower end of the through hole 72a is opened in a space Vc in the narrowed hole portion 7e2 of the outer nozzle 71.

In a state where the nozzle 7 is mounted to the machining head main body 21 of the laser machining head 2, the axis CL7 coincides with an optical axis CLs of the laser beam Ls.

That is, the laser beam Ls entering from a machining head main body 21 side into the nozzle 7 passes through a space Va in the through hole 72a and the space Vc, and is emitted through the outlet hole 7e3 to an external space Vg.

The assist gas AG supplied from the assist gas supply device 3 to the machining head main body 21 of the laser machining head 2 passes through the space Vb as the communication path and the space Vc and is emitted through the outlet hole 7e3 to the external space Vg.

As shown in Figure 4 to Figure 6, the outer nozzle 71 includes, as second communication holes, a plurality of communication holes 74 through which the cooling fluid F is ejected. In this example, twelve communication holes 74 are formed at an angle pitch of 30° in a circumferential direction.

Each of the communication holes 74 includes an inlet opening 74a on an inlet side, an outlet opening 74c on an outlet side, and a straight passage 74b connecting the inlet opening 74a and the outlet opening 74c.

The outlet opening 74c of each of the plurality of second communication holes is formed as a substantially elliptic hole in the same shape having a center located on a circle with a predetermined diameter around the axis CL7.

The inlet opening 74a is opened in the inclined surface 7f of the outer nozzle 71.

As shown in Figure 4, the passage 74b has an axis parallel to a diameter of the nozzle 7 via a distance Da in top surface view. In a longitudinal section shown in Figure 6, the passage 74b is inclined at an angle θb toward the downside and extends close to the axis CL7.

The outlet opening 74c is opened in the main body end face portion 7a2 of the main body part 7a. Each communication hole 74 is made from the inlet opening 74a with a drill. Figure 3 and Figure 6 show a state where a part of the coupling portion 7ab is drilled to form the inlet opening 74a with a tip end of the drill.

As shown in Figure 4, the whole opening of the inlet opening 74a is visually recognized in the top surface view.

On the other hand, as shown in Figure 2, the outlet opening 74c is covered with the tip end part 7b and becomes invisible in bottom surface view. That is, as shown in Figure 2 and Figure 5, the inclined surface portion 7b2 in the tip end part 7b extends so that an outer diameter (diameter) D7b of the inclined surface portion is set to be larger than a diameter D74c of a circumscribed circle of the outlet opening 74c that is shown with a broken line in Figure 2. Figure 2 shows the diameter D74c with a chain line.

The cooling fluid F supplied from the cooling fluid supply device 4 flows into the inlet opening 74a of each communication hole 74. The cooling fluid F that flows inward passes through the passage 74b and is ejected through the outlet opening 74c to the outside.

Here, as shown in Figure 4, the passage 74b is straightly formed at a position deflected by the distance Da from the axis CL7. Consequently, as shown in Figure 2, the cooling fluid F ejected through the outlet opening 74c is ejected outward in a radial direction deviating from the radial direction passing through the axis CL7 in one direction (a clockwise direction) around the axis CL7 as seen from the downside.

Also, as shown in Figure 6, the facing surface portion 7b1 and the inclined surface portion 7b2 of the tip end part 7b are present right under the outlet opening 74c. Consequently, the cooling fluid F ejected through the outlet opening 74c cannot directly continue to flow downward to reach the work W as it is, and hits the facing surface portion 7b1 and the inclined surface portion 7b2. Afterward, the cooling fluid F cannot flow inward in the radial direction due to presence of the coupling portion 7ab, and moves outward in the radial direction and is ejected obliquely downward along inclination of the inclined surface portion 7b2.

As described above, each outlet opening 74c of the nozzle 7 is hidden behind the tip end part 7b and invisible in the bottom surface view. Consequently, the cooling fluid F ejected through the outlet opening 74c does not move downward as it is after being ejected and reach the work W.

This reduces occurrence of such a defect in laser machining that the cooling fluid F ejected through each outlet opening 74c flows around on a tip end face portion 7b3 side of the nozzle 7 to make a tracking operation unstable and to decrease machining accuracy.

As shown in Figure 5, an inclination angle θa of the inclined surface portion 7b2 is set to a large angle of 67.5° or more, and the cooling fluid F ejected through each outlet opening 74c is not allowed to flow downward or directly reach the work W, and is deflected outward in the radial direction.

Consequently, the cooling fluid F ejected through the outlet opening 74c is more difficult to flow around on the tip end face portion 7b3 side of the nozzle 7, and possibility of occurrence of a defect that the cooling fluid F is mixed into the assist gas AG ejected through the outlet hole 7e3 to decrease the machining accuracy is more reduced.

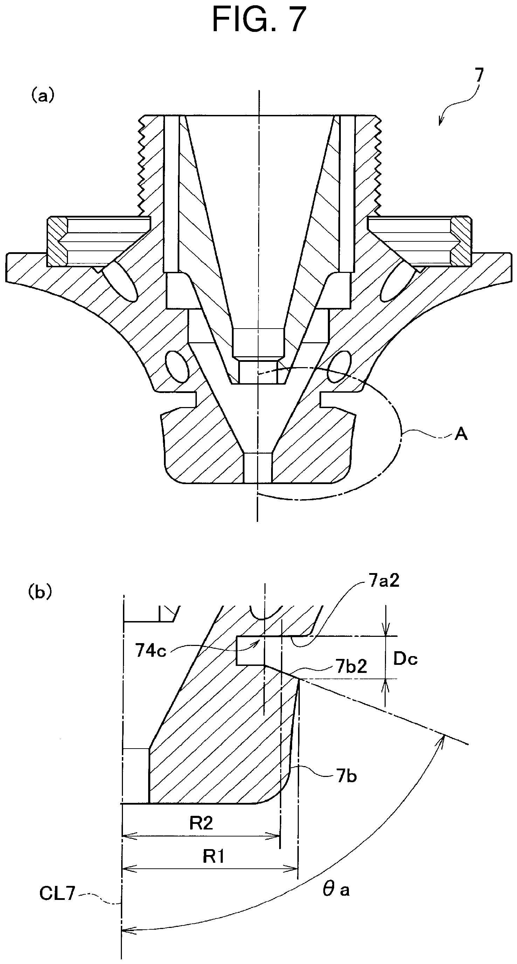

Next, description will be made as to the result of simulation that verifies the difficulty of the cooling fluid F flowing around on the tip end face portion 7b3 side in the nozzle 7 described above. First, the simulation will be described with reference to Figure 7 to Figure 9.

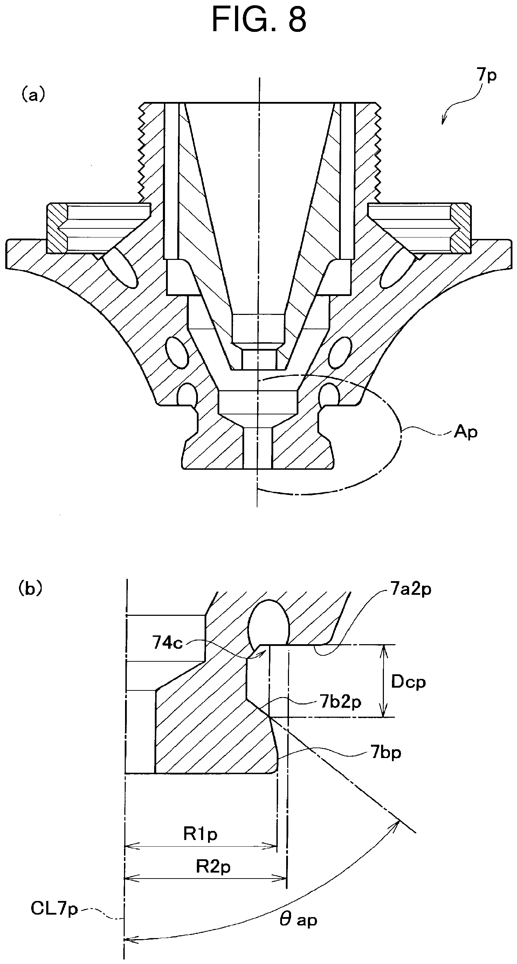

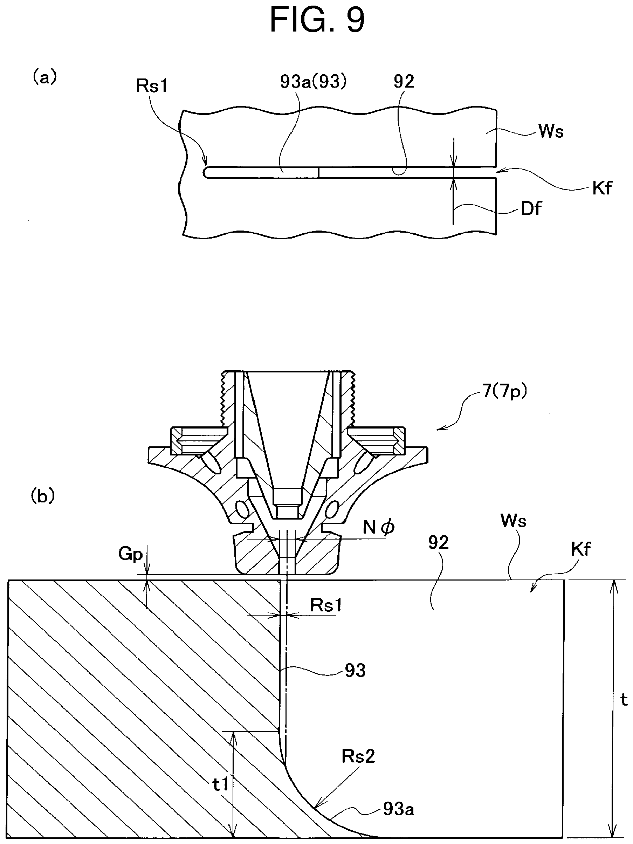

Figure 7 and Figure 8 are views for explaining shapes of the nozzle 7 of the present embodiment and a comparative nozzle 7p of a comparative example that were used in the simulation. Also, Figure 9 is a model diagram for simulation of a state where a plate material with a thickness t is cut with the nozzle 7 and the comparative nozzle 7p.

In this simulation, as shown in Figure 9, a cutting front 93 in middle of laser cutting of the plate material with the nozzle 7 and the comparative nozzle 7p is set as basic setting, and flow velocity distributions of the assist gas AG and the cooling fluid F in the vicinity of the cutting front 93 are obtained by calculation and displayed.

Figure 7 shows a longitudinal sectional view of the nozzle 7 of the present embodiment, and a partial sectional view showing details of a main part A. Figure 8 shows a longitudinal sectional view of the comparative nozzle 7p, and a partial sectional view showing details of a main part Ap.

In the nozzle 7, a maximum outer diameter of the tip end part 7b is shown as a radius R1, and a radius R2 is a radius of the circumscribed circle of each outlet opening 74c through which the cooling fluid F is ejected.

The radius R1 and the radius R2 correspond to radii of the diameter D7b and the diameter D74c shown in Figure 2, respectively.

An angle corresponding to an inferior angle of the inclined surface portion 7b2 in the nozzle 7 to the axis CL7 is the inclination angle θa, and a distance in the up-down direction between outer edges of the main body end face portion 7a2 and the inclined surface portion 7b2 in which the outlet opening 74c is opened is a distance Dc.

Also, in the comparative nozzle 7p, similarly to the nozzle 7, a maximum outer diameter of a tip end part 7bp is shown as a radius R1p, and a radius R2p is a maximum opening radius of the outlet opening 74c through which the cooling fluid F is ejected.

An angle corresponding to an inferior angle of an inclined surface portion 7b2p in the comparative nozzle 7p to an axis CL7p is an inclination angle θap, and a distance in the up-down direction between outer edges of a main body end face portion 7a2p and the inclined surface portion 7b2p in which the outlet opening 74c is opened is a distance Dcp.

Specifically, simulation was executed at values as follows.
Nozzle 7 (Comparative nozzle 7p)
Radius R1: 5 mm (Radius R1p: 3.75 mm)
Radius R2: 4.1 mm (Radius R2p: 4.2 mm)
Inclination angle θa: 67.5° (Inclination angle θap: 45°)
Distance Dc: 1.25 mm (Distance Dcp: 1.7 mm)
Inner diameter D74b of the passage 74b of each communication hole 74: 1.0 mm

Figure 9 is a model diagram of a cut part used in the simulation. Figure 9(a) is a view of the cut part in middle of cutting of a work Ws seen from above.

In Figure 9(a), a width of a kerf Kf is a width Df. The cutting front 93 was formed in a circular-arc shape with a radius Rs1.

Figure 9(b) is a sectional view of the kerf cut at a center position in a width direction.

As shown in Figure 9(b), the cutting front 93 was set in the up-down direction relative to a thickness t of the work Ws, and a lower side from a position at a distance t1 from a bottom surface of the work Ws was formed as a delay part 93a defined as a circular-arc shape with a radius Rs2. A side wall of the kerf Kf was formed as a kerf side wall 92.

In the simulation, respective values of a model of this cut part were set as follows and calculation was performed.
Thickness t: 25 mm
Distance t1: 10 mm
Width Df: 1.0 mm
Radius Rs1: 0.5 mm
Radius Rs2: 10 mm
Nozzle gap Gp: 0.7 mm
Assist gas pressure: 0.12 MPa
Cooling fluid pressure: 0.3 MPa
Nozzle diameter Nφ: 1.4 mm

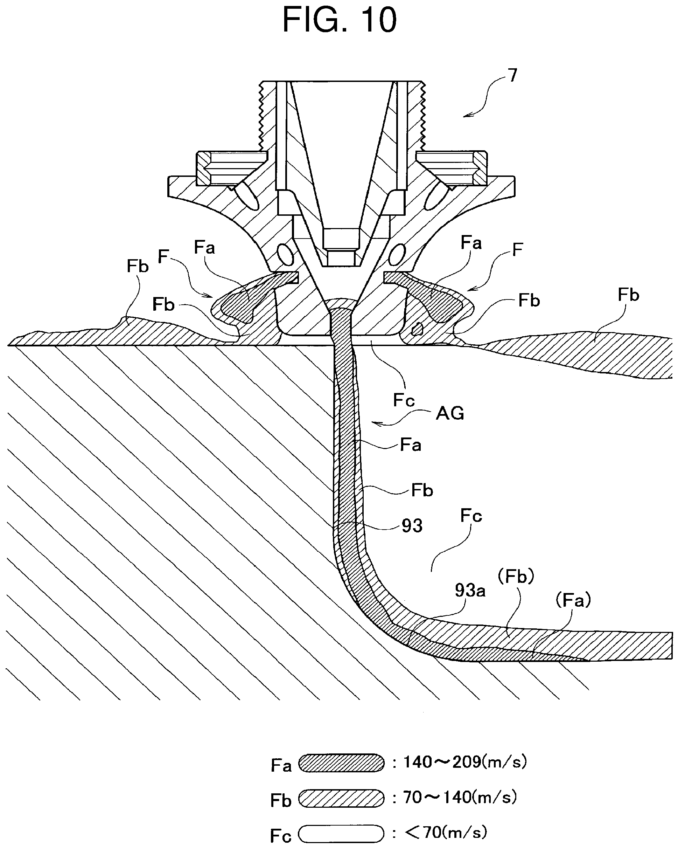

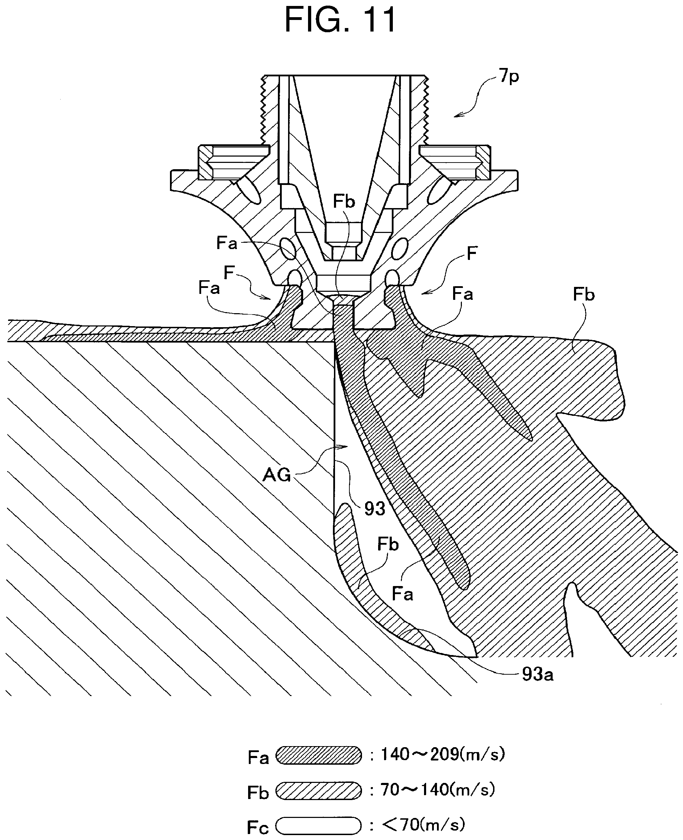

As a result of the simulation, the result of Figure 10 was obtained as to the nozzle 7. Also, the result of Figure 11 was obtained as to the comparative nozzle 7p of the comparative example.

In each case, a flow velocity was classified and evaluated in three stages of a high velocity region, a medium velocity region and a low velocity region, and is schematically shown with hatching based on the classification in Figure 10 and Figure 11. The respective regions are as follows.
High velocity region Fa (dense hatching): 140 to 209 m/s
Medium velocity region Fb (coarse hatching): 70 to 140 m/s
Low velocity region Fc (plain): < 70 m/s

As shown in Figure 10, in the case of the nozzle 7 of the present embodiment, it is seen that the assist gas AG emitted from a center of the nozzle 7 flows along the cutting front 93 including the delay part 93a while the flow substantially remains in the high velocity region Fa.

On the other hand, the cooling fluid F ejected outward in the radial direction flows in the high velocity region Fa immediately after being ejected, then flows in the medium velocity region Fb, and generally reaches a top surface of the work Ws in a region outside the tip end part 7b of the nozzle 7. Therefore, it is confirmed that a region between the nozzle 7 and the work Ws is the low velocity region Fc and that the cooling fluid F hardly flows around.

Consequently, according to the nozzle 7, the cooling fluid F does not flow around between the nozzle 7 and the work Ws and reliably reaches the work Ws. Therefore, it is seen that the work Ws is cooled with the cooling fluid F, while the tracking operation does not become unstable, and does not affect the flow of the assist gas AG, and any defects do not occur in the laser machining.

On the other hand, as shown in Figure 11, in the case of the comparative nozzle 7p of the comparative example, it is confirmed that the assist gas AG emitted from a center of the comparative nozzle 7p flows in the high velocity region Fa, but does not flow along a direction of the cutting front 93, and flows in the kerf Kf deviating on a side (right side of Figure 11) opposite to a machining direction.

Also, it is confirmed that flow of the cooling fluid F ejected outward in the radial direction reaches the work Ws while maintained in the high velocity region Fa immediately after being ejected, a reached position is close to the center of the comparative nozzle 7p, and the fluid in the high velocity region Fa flows around and into a space between the comparative nozzle 7p and the work Ws.

That is, it is seen that in the comparative nozzle 7p, the assist gas AG does not effectively act in melting in the cutting front 93 to cause a defect in laser machining, and there is high possibility that the tracking operation becomes unstable.

In the simulation, when it is considered that the inclination angle θa of the inclined surface portion 7b2 in the nozzle 7 is 67.5° and that the inclination angle θap of the inclined surface portion 7b2p of the comparative nozzle 7p is 45°, the inclination angle θa may be at least 67.5° or more.

From the above simulation result, it has been confirmed that the nozzle 7 of the present embodiment is capable of ejecting the cooling fluid F, while the defect in the laser machining is less likely to occur.

Furthermore, three items of the radius R1, the inclination angle θa and the distance Dc in the nozzle 7 were set to 5 mm, 67.5°, and 1.25 mm, respectively, as described above, and in the three items, two were fixed and one was changed to investigate the flow velocity of the cooling fluid F by the simulation.

As a result, in a case where the radius R1 is only changed, it has been confirmed that when the radius R1 matches the radius R2 and is 4.1 mm or less, the cooling fluid is remarkably caught into a space between a nozzle tip end and the work, and hence, when the radius R1 has a value more than a value of the radius R2, the fluid is sufficiently less caught satisfactorily.

Also, it has been confirmed that when the radius R1 increases to a certain degree, the flow outward in the radial direction weakens, and hence a magnification of the radius R1 to the radius R2 is more than 1 time and 1.3 times or less.

In a case where the distance Dc is only changed, it has been confirmed that when the distance is equal to the inner diameter D74b of the passage 74b and 1.00 mm or less, a gap of an outlet of the cooling fluid F is small, resulting in the difficulty of the cooling fluid F flowing outward in the radial direction.

On the other hand, it has been confirmed that when the distance Dc is 2.00 mm or more, the flow caught between the nozzle and the work also occurs in addition to the flow outward in the radial direction.

That is, it has been confirmed that the distance Dc is satisfactorily more than one time the inner diameter D74b of the passage 74b, i.e., 1.00 mm and less than two times the inner diameter D74b, i.e., 2.00 mm. Also, it has been confirmed that when the distance Dc is in a range of 1.15 times the inner diameter D74b, i.e., 1.15 mm or more and 1.75 times the inner diameter D74b, i.e., 1.75 mm or less, the flow outward in the radial direction is sufficiently obtained, the flow is not caught between the nozzle and the work, and particularly satisfactory flow can be obtained.

In a case where the inclination angle θa is only changed, it has been confirmed that at the inclination angle θa of 45° or less, downward flow occurs and the flow outward in the radial direction is less likely to occur.

On the other hand, it has been confirmed that at the inclination angle θa of 82.5° or more, the flow is mainly caught at the tip end of the nozzle, and the flow outward in the radial direction does not occur.

That is, it has been confirmed that the inclination angle θa is satisfactorily more than 45° and less than 82.5°. Also, it has been confirmed that particularly at the inclination angle θa in a range of 52.5° or more and less than 75°, the flow outward in the radial direction is sufficiently obtained, the flow is not caught between the nozzle and the work, and particularly satisfactory flow can be obtained.

The present embodiment is not limited to the above described configuration, and can be modified without departing from the summary of the present invention as defined by the appended claims.

The plurality of outlet openings 74c are not limited to a configuration where all the openings have the same opening shape and the same inner diameter (major axis), and may include an outlet opening in which at least one of the opening shape and the inner diameter (major axis) is different.

In this case, the diameter D74c described for the circumscribed circle is a diameter of a circumscribed circle of the outlet opening 74c having a largest opening position in the radial direction.

The cooling fluid is not limited to the mixture of air and water as long as the fluid is mixture of gas and liquid. The laser oscillator 1 is not limited to the fiber laser, and may be another type of laser.

It has been described that the nozzle 7 is of the double nozzle type including the outer nozzle 71 and the inner nozzle 72, but is not limited to a double nozzle, and may be of a single nozzle type or a triple nozzle type.

## Claims

1. A nozzle (7) for laser machining comprising a main body (7a) provided with a flange portion (7c) and formed in an annular shape, the main body (7a) comprising:
a first communication hole (7e) extending through an upper end portion as a first end portion and a lower end portion as a second end portion around an axis (CL7) of the nozzle (7) along an up-down direction;
a circumferential groove portion (7g) provided between the flange portion (7c) and the second end portion; and
a plurality of second communication holes (74) communicating between a surface of the flange portion (7c) on a first end portion side of the flange portion (7c) and a side surface (7a2) of the circumferential groove portion (7g) on the first end portion side of the circumferential groove portion (7g),
**characterized in that**
an outer diameter of a side surface (7b1,7b2) of the circumferential groove portion (7g) on a second end portion side is larger than a diameter of a circumscribed circle of the plurality of second communication holes (74) so that the plurality of second communication holes (74) are invisible from the second end portion side, and
the side surface of the circumferential groove portion (7g) on the second end portion side includes an inclined surface (7b2) tilted to the second end portion side toward outside in a radial direction.

2. The nozzle (7) for laser machining according to claim 1, wherein the inclined surface is formed as a surface at an angle corresponding to an inferior angle formed between the surface and the axis (CL7) in a longitudinal section in the up-down direction including the axis (CL7), the angle being more than 45° and less than 82.5°.

3. The nozzle (7) for laser machining according to claim 1 or 2, wherein a distance in the up-down direction between outer edges of the side surface (7a1) of the circumferential groove portion (7g) on the first end portion side and the side surface (7b2) of the circumferential groove portion (7g) on the second end portion side is more than one time and less than two times an inner diameter of each of the second communication holes (74).

4. A laser machining apparatus (71) comprising:
a laser oscillator;
an assist gas supply device;
a cooling fluid supply device; and
a laser machining head including, at a tip end, the nozzle (7) for laser machining according to any one of claims 1 to 3, wherein
through the first communication hole (7e), a laser beam supplied from the laser oscillator and assist gas supplied from the assist gas supply device are emitted, and
through the plurality of second communication holes (74), cooling fluid supplied from the cooling fluid supply device is ejected.

## Patentansprüche

1. Eine Düse (7) zur Laserbearbeitung mit einem Hauptkörper (7a), der mit einem Flanschabschnitt (7c) versehen und ringförmig ausgebildet ist, wobei der Hauptkörper (7a) Folgendes umfasst:
ein erstes Verbindungsloch (7e), das sich durch einen oberen Endabschnitt als einen ersten Endabschnitt und einen unteren Endabschnitt als einen zweiten Endabschnitt um eine Achse (CL7) der Düse (7) entlang einer Aufwärts-Abwärts-Richtung erstreckt;
einen Umfangsrillenabschnitt (7g), der zwischen dem Flanschabschnitt (7c) und dem zweiten Endabschnitt angeordnet ist; und
eine Vielzahl von zweiten Verbindungslöchern (74), die zwischen einer Oberfläche des Flanschabschnitts (7c) auf einer ersten Endabschnittsseite des Flanschabschnitts (7c) und einer Seitenfläche (7a2) des Umfangsrillenabschnitts (7g) auf der ersten Endabschnittsseite des Umfangsrillenabschnitts (7g) in Verbindung stehen,
**gekennzeichnet dadurch, dass**
ein Außendurchmesser einer Seitenfläche (7b1, 7b2) des Umfangsrillenabschnitts (7g) auf einer zweiten Endabschnittsseite größer ist als ein Durchmesser eines umschriebenen Kreises der Vielzahl von zweiten Verbindungslöchern (74), so dass die Vielzahl von zweiten Verbindungslöchern (74) von der zweiten Endabschnittsseite aus unsichtbar sind, und
die Seitenfläche des Umfangsrillenabschnitts (7g) auf der zweiten Endabschnittsseite eine geneigte Fläche (7b2) aufweist, die zu der zweiten Endabschnittsseite nach außen in einer radialen Richtung geneigt ist.

2. Die Düse (7) zur Laserbearbeitung gemäß Anspruch 1, wobei
die geneigte Fläche als eine Fläche mit einem Winkel ausgebildet ist, der einem unteren Winkel entspricht, der zwischen der Fläche und der Achse (CL7) in einem Längsschnitt in der Aufwärts-Abwärts-Richtung einschließlich der Achse (CL7) gebildet wird, wobei der Winkel mehr als 45° und weniger als 82,5° beträgt.

3. Die Düse (7) zur Laserbearbeitung gemäß Anspruch 1 oder 2, wobei
ein Abstand in der Auf-Ab-Richtung zwischen den Außenkanten der Seitenfläche (7a1) des Umfangsrillenabschnitts (7g) auf der Seite des ersten Endabschnitts und der Seitenfläche (7b2) des Umfangsrillenabschnitts (7g) auf der Seite des zweiten Endabschnitts mehr als das Einfache und weniger als das Zweifache eines Innendurchmessers jedes der zweiten Verbindungslöcher (74) beträgt.

4. Ein Laserbearbeitungsgerät (71) mit:
einen Laser-Oszillator;
eine Hilfsgaszufuhrvorrichtung;
eine Kühlmittelzufuhrvorrichtung; und
einen Laserbearbeitungskopf, der an einem Spitzenende die Düse (7) zur Laserbearbeitung gemäß einem der Ansprüche 1 bis 3 aufweist, wobei
durch das erste Verbindungsloch (7e) ein von dem Laser-Oszillator gelieferter Laserstrahl und ein von der Hilfsgaszufuhrvorrichtung geliefertes Hilfsgas emittiert werden, und
durch die Vielzahl von zweiten Verbindungslöchern (74) Kühlmittel, das von der Kühlmittelzufuhrvorrichtung zugeführt wird, ausgestoßen wird.

## Revendications

1. Buse (7) pour l'usinage au laser comprenant un corps principal (7a) pourvu d'une partie de bride (7c) et de forme annulaire, le corps principal (7a) comprenant :
un premier trou de communication (7e) s'étendant à travers une partie d'extrémité supérieure en tant que première partie d'extrémité et une partie d'extrémité inférieure en tant que deuxième partie d'extrémité autour d'un axe (CL7) de la buse (7) le long d'un sens ascendant descendant ;
une partie de rainure circonférentielle (7g) prévue entre la partie de bride (7c) et la deuxième partie d'extrémité ; et
une pluralité de deuxièmes trous de communication (74) communiquant entre une surface de la partie de bride (7c) sur un premier côté de la partie de bride (7c) et une surface latérale (7a2) de la partie de rainure circonférentielle (7g) sur le premier côté de la partie d'extrémité de la rainure circonférentielle (7g),
**caractérisée en ce que**
un diamètre extérieur d'une surface latérale (7b1, 7b2) de la partie de rainure circonférentielle (7g) sur un deuxième côté de la partie d'extrémité est plus grand qu'un diamètre d'un cercle circonscrit de la pluralité de deuxièmes trous de communication (74) de sorte que la pluralité de deuxièmes trous de communication (74) sont invisibles depuis le deuxième côté de la partie d'extrémité, et
la surface latérale de la partie de rainure circonférentielle (7g) sur le côté de la deuxième partie d'extrémité inclut une surface inclinée (7b2) inclinée vers le côté de la deuxième partie d'extrémité vers l'extérieur dans un sens radial.

2. Buse (7) pour l'usinage au laser selon la revendication 1, dans laquelle la surface inclinée est formée comme une surface à un angle correspondant à un angle inférieur formé entre la surface et l'axe (CL7) dans une section longitudinale dans le sens haut-bas incluant l'axe (CL7), l'angle étant supérieur à 45° et inférieur à 82,5°.

3. Buse (7) pour l'usinage au laser selon la revendication 1 ou 2, dans laquelle une distance dans le sens haut-bas entre les bords extérieurs de la surface latérale (7a1) de la partie de rainure circonférentielle (7g) du côté de la première partie d'extrémité et la surface latérale (7b2) de la partie de rainure circonférentielle (7g) du côté de la deuxième partie d'extrémité est plus d'une fois et moins de deux fois un diamètre intérieur de chacun des deuxièmes trous de communication (74).

4. Appareil d'usinage au laser (71) comprenant :
un oscillateur laser ;
un dispositif d'alimentation en gaz d'assistance ;
un dispositif d'alimentation en fluide de refroidissement ; et
une tête d'usinage laser comprenant, à une extrémité, la buse (7) pour l'usinage au laser selon l'une quelconque des revendications 1 à 3, dans lequel
à travers le premier trou de communication (7e), un faisceau laser fourni par l'oscillateur laser et un gaz d'assistance fourni par le dispositif d'alimentation en gaz d'assistance sont émis, et
à travers la pluralité de deuxièmes trous de communication (74), le fluide de refroidissement fourni par le dispositif d'alimentation en fluide de refroidissement est éjecté.
